Europäisches Patentamt

(19) European Patent Office

Office européen des brevets

(11) Publication number: **0 207 720**
**B1**

(12) **EUROPEAN PATENT SPECIFICATION**

(45) Date of publication of patent specification: **07.11.90**

(21) Application number: **86304876.5**

(22) Date of filing: **24.06.86**

(51) Int. Cl.⁵: **B 05 C 21/00**

(54) A masking member.

(30) Priority: **27.06.85 JP 97812/85 u**
**31.07.85 JP 117880/85 u**
**26.09.85 JP 146892/85 u**

(43) Date of publication of application:
**07.01.87 Bulletin 87/02**

(45) Publication of the grant of the patent:
**07.11.90 Bulletin 90/45**

(84) Designated Contracting States:
**DE FR GB IT SE**

(56) References cited:
**DE-A-2 746 502**
**DE-B-2 112 731**
**FR-A-2 384 683**
**US-A-3 667 988**
**US-A-3 752 304**
**US-A-4 398 495**

(73) Proprietor: **NAGOYA OILCHEMICAL CO., LTD.**
**213-5 Honowari Minamishibata-cho**
**Tokai-shi Aichi (JP)**

(72) Inventor: **Horiki, Seinosuke NAGOYA**
**OILCHEMICAL CO., LTD.**
**213-5 Honowari Minamishibata-cho**
**Tokai Aichi (JP)**
Inventor: **Makino, Reiji NAGOYA OILCHEMICAL**
**CO., LTD.**
**213-5 Honowari Minamishibata-cho**
**Tokai Aichi (JP)**
Inventor: **Iwata, Hisami**
**c/o Toyota Jidosha Kabushiki Kaisha**
**1 Toyota-cho Toyota Aichi (JP)**

(74) Representative: **Senior, Alan Murray et al**
**J.A. KEMP & CO 14 South Square Gray's Inn**
**London WC1R 5EU (GB)**

Courier Press, Leamington Spa, England.

## Description

The instant invention relates to a masking member used to protect a part of an article from a surface treatment according to the preamble of claim 1.

Hitherto, adhesive tapes have been used as a masking member to protect a part of an article from a surface treatment, such as coating, plating, phosphatizing and the like. Namely, the adhesive tapes are attached to a part of an article to protect it from the surface treatment and after the surface treatment, said adhesive tapes are removed from part of the article. Said part is not affected by said surface treatment since said part was covered with the adhesive tapes during the surface treatment.

Nevertheless, said adhesive tapes as the masking member has faults. In case that the part to be protected from the surface treatment is wide, it is troublesome to attach the adhesive tapes to the part to be protected and remove said adhesive tapes from said part since a number of strips of adhesive tapes must be attached to said part to cover the whole part, and further, in the case that adhesive tapes are subjected to heat, said adhesive tapes stick to the part due to heating and the stripping of said adhesive tapes becomes very difficult.

Accordingly, an object of the instant invention is to save trouble when the masking member is attached/removed to/from said part.

DE—B—2112731 discloses a template to mask a side window of a motor vehicle, having an adhesive layer covered by a release sheet.

According to the present invention there is provided a masking member comprising a panel of plastics material, an adhesive layer formed on one side of said panel, and a release sheet which covers said adhesive layer, characterised in that the panel is of plastics foam, and in that grooves are formed in selected positions on one or both sides of the panel.

When the masking member is used, the release sheet is removed from said adhesive layer and the masking member is torn along selected ones of the grooves by hand to provide a piece having the proper size corresponding to the part of an article which is necessary to be protected from surface treatment.

The panel may be produced by expansion moulding, or cutting out from foam blocks.

A preferred feature of the instant invention prevents the adhesive layer from soaking in the panel due to the panel consisting of plastic foam. This preferred feature is a primer layer intermediate between the panel and the adhesive layer.

Preferably there are provided cutting lines in the release sheet. This makes it possible to easily cut said masking member to a piece having a proper size corresponding with a part of an article which is necessary to be protected from a surface treatment.

In order that the invention may be more clearly understood the following description is given by way of example only with reference to the accompanying drawings in which:

Fig. 1 is a partial perspective view of a first embodiment of the instant invention.

Fig. 2 is a partial side sectional view of the first embodiment of the instant invention.

Fig. 3 is a partial perspective view of the first embodiment of the instant invention in the case of coating.

Fig. 4 is a partial perspective view of the first embodiment of the instant invention in the case of removing the masking member from the article.

Fig. 5 is a partial perspective view of a second embodiment of the instant invention.

Fig. 6 is a partial side sectional view of the second embodiment of the instant invention.

Fig. 7 is a partial perspective view of a third embodiment of the instant invention.

Fig. 8 is a partial side sectional view of the third embodiment of the instant invention.

Fig. 9 is a perspective view of the piece of the third embodiment.

Fig. 10 is a plane view of another embodiment of the release sheet having cutting lines.

Fig. 11 is a plane view of further embodiment of the release sheet having cutting lines.

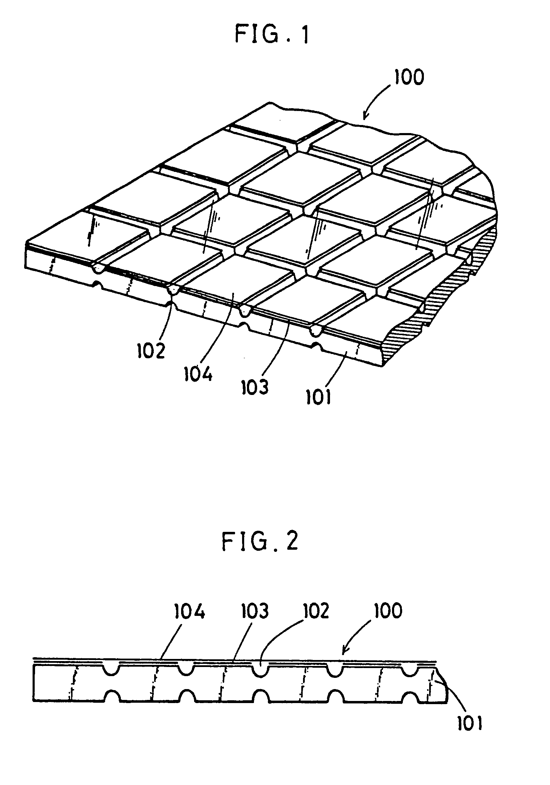

Fig. 1 to Fig. 4 relate to a first embodiment of the instant invention.

Referring now to Fig. 1 to Fig. 4, a masking member (100) comprises a panel (101) consisting plastic foam, such as polystyrene foam and the like. Checker grooves (102) are formed at regular intervals on both sides of said panel (101), and an adhesive layer (103) is formed on a side of said panel (101). Said adhesive layer (103) is covered with a release sheet (104) such as a polyethylene film, a polypropylene film, a release paper, and the like to prevent sticking to another article, hands of workers, and the like when the masking members are handled; one placed upon another, transported, and the like. Said panel (101) of the masking member (100) may be produced by expansion molding, cutting out from blocks of plastic foam and grooves of the masking members of the instant invention may include cutting lines. Said grooves may be formed when the panel is molded or by cutting after the panel is molded or cut out.

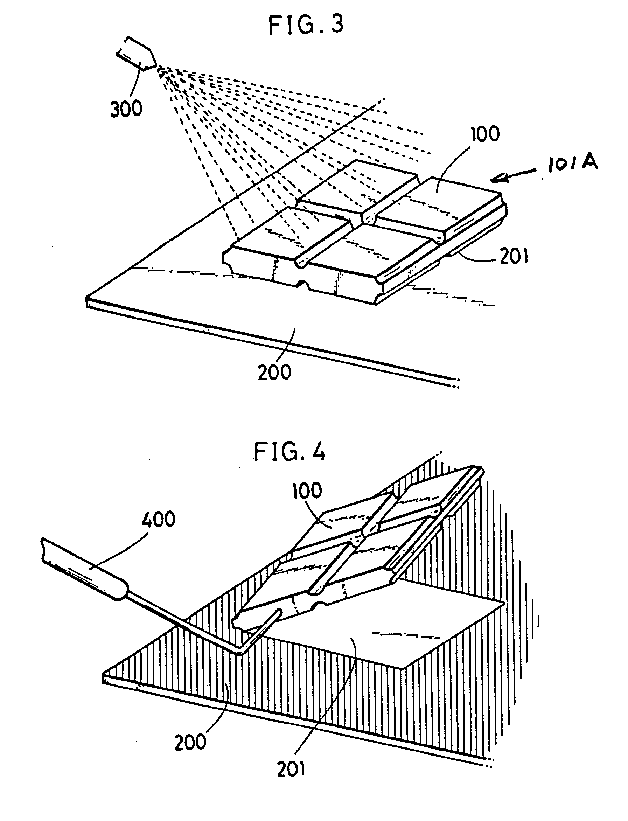

When the masking member (100) is used, the release sheet (104) is removed from the adhesive layer (103) and the panel (101) is torn along the grooves by hand to a piece (101A) having the proper size corresponding with a part (201) of an article (200) which is necessary to be protected from a surface treatment such as coating, plating, phosphatizing and the like. The resulting piece (101A) is then attached to said part (201) of an article (200) by the adhesive layer (103) thereof as shown in Fig. 3.

In the case of coating, paint is sprayed from a spray gun (300) on the surface of the article (200). The part (201) of an article (200) is not subjected to said coating since said part (201) is covered with the piece (101A) of the masking member (100). After coating, said coated article (200) is heated to dry and/or cure if desired. After or before said heating, the piece (101A) is stripped by a hook (400) as shown in Fig. 4 or by hand or in case that the heating temperature is higher enough than the softening point of plastic as the material of the panel (101), the piece (101A) will shrink by said heating and come off by itself from the part (201) of the article (200).

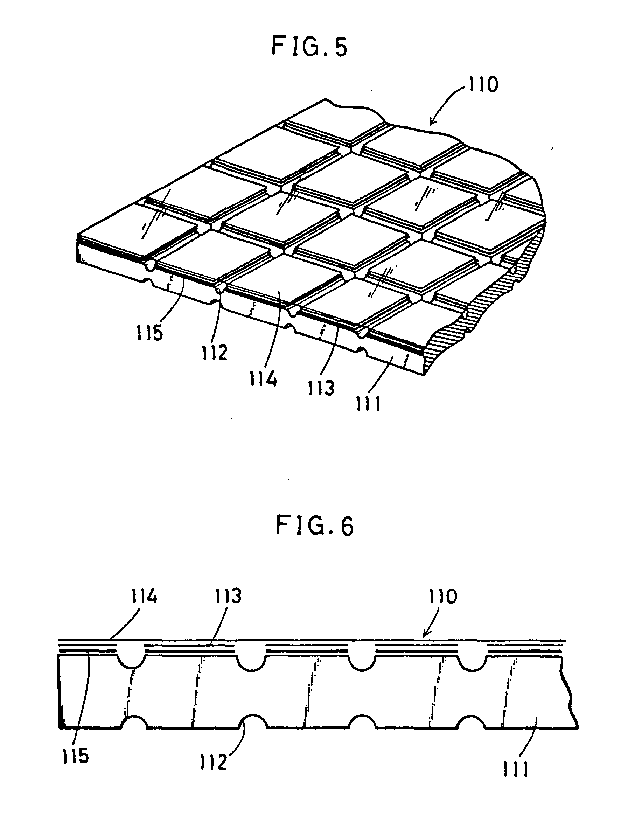

Fig. 5 and Fig. 6 relate to the second embodiment of the instant invention.

Referring now to Fig. 5 and Fig. 6, a masking member (110) comprises a panel (111) consisting of plastic foam, the same as the first embodiment and grooves (112), the same as the first embodiment are formed on both sides of said panel (111). A primer layer (115) is formed on a side of the panel (111) and an adhesive layer (113) is formed on said primer layer (115). Said adhesive layer (113) is covered with a release sheet (114), the same as the first embodiment. Said primer layer (115) prevents the adhesive layer (113) soaking in the panel (111) since the panel (111) consists of the plastic foam and the surface of the panel (111) is porous, and said primer layer (115) is formed by laminating the film of plastic such as, polyethylene, polypropylene, vinylacetate-ethylene copolymer, polyvinylchloride and the like by heating or adhesive, or by coating with an emulsion or a solution of the synthetic resin such as acrylic resin, polyvinyl acetate resin, polyethylene, polypropylene, vinyl acetate-ethylene copolymer and the like on a side of the panel (111). Further, the skin layer formed on the surface of the panel (111), in case that said panel (111) is produced by the expansion molding, may also be used as the primer layer (115).

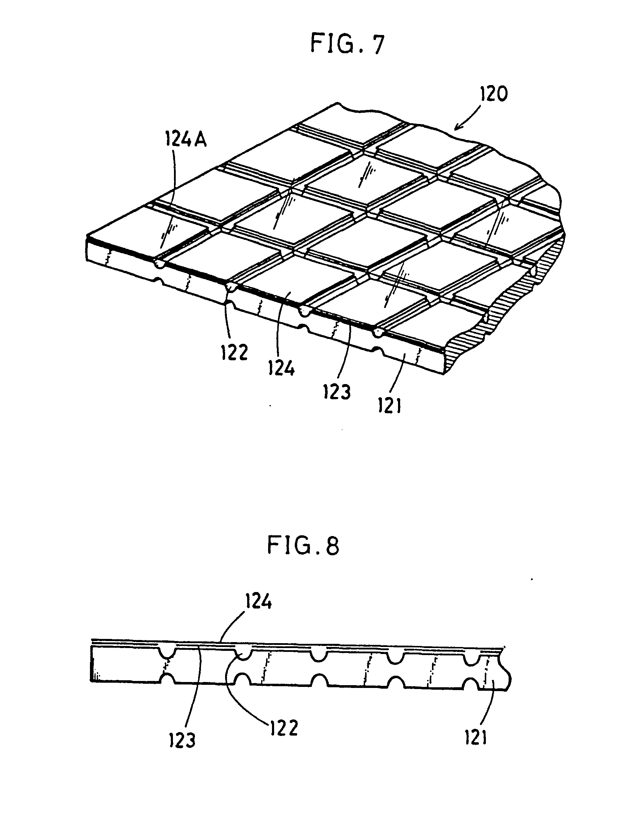

Fig. 7 to Fig. 9 relate to the third embodiment of the instant invention.

Referring now to Fig. 7 to Fig. 9, a masking member (120) comprises a panel (121) consisting of plastic foam, the same as the first and second embodiments and grooves (122), the same as the first and second embodiment, are formed on both sides of said panel (121). An adhesive layer (123) is formed on a side of the panel (121) and said adhesive layer (123) is covered with a release sheet (124). Cutting lines (124A) along the grooves (122) of the panel (121) are formed in the release sheet (124).

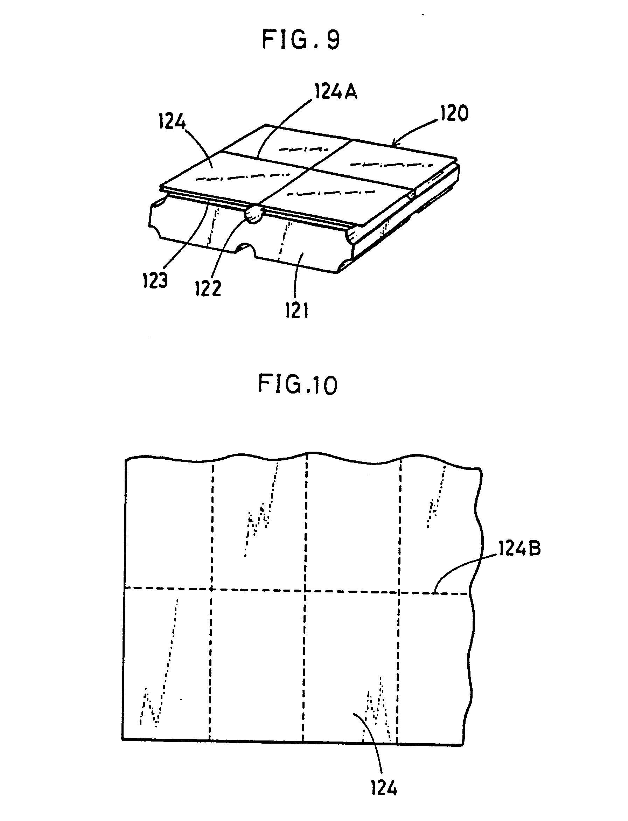

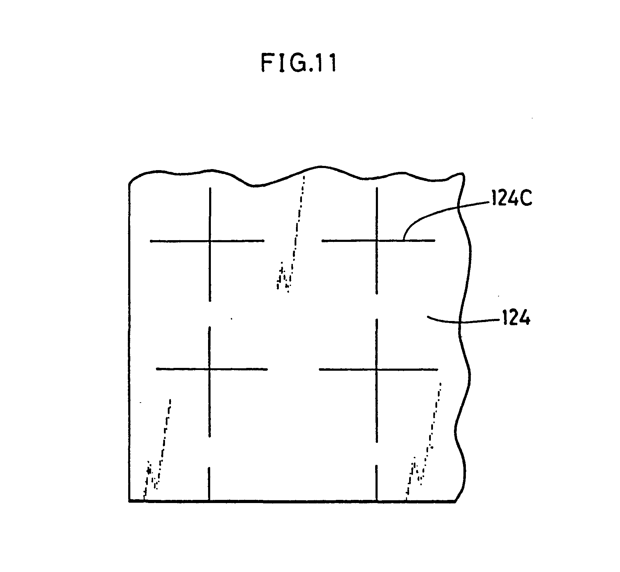

When the masking member (120) is used, the panel (121) is torn along the grooves (122) by hand to a piece (121A) having a size corresponding with a part of an article and at the same time, the release sheet (124) is easily torn along the cutting lines (124A). Said cutting lines may include perforated lines (124B) as shown in Fig. 10 and discontinuous lines (124C) in Fig. 11.

## Claims

1. A masking member comprising a panel (101, 111, 121) of plastics material, an adhesive layer (103, 113, 123) formed on one side of said panel, and a release sheet (104, 114, 124) which covers said adhesive layer, characterised in that the panel is of plastics foam, and in that grooves (102, 112, 122) are formed in selected positions on one or both sides of the panel.

2. A masking member according to claim 1, characterised in that said plastics foam is polystyrene foam.

3. A masking member according to claim 1 or 2, characterised in that said release sheet (104, 114, 124) is a release paper.

4. A masking member according to claim 1, 2 or 3, characterised in that said panel (102, 112, 122) is produced by expansion molding.

5. A masking member according to claim 1, 2 or 3, characterised in that said panel (102, 112, 122) is produced by cutting out from blocks of plastics foam.

6. A masking member according to any preceding claim, characterised by a primer layer (115) being intermediate between said panel (111) and said adhesive layer (113).

7. A masking member according to claim 6, characterised in that said primer layer (115) is the skin of the panel formed by expansion molding.

8. A masking member according to any preceding claim characterised in that the release sheet (124) which covers said adhesive layer (123) has cutting lines (124A, B, C) along the grooves of said panel.

9. A masking member according to claim 8 characterised in that said cutting lines (124A, 124C) are continuous or discontinuous lines.

10. A masking member according to claim 8, characterised in that said cutting lines (124B) are dotted lines.

## Patentansprüche

1. Maske mit einer Platte (101, 111, 121) aus Kunststoffmaterial, einer Klebstoffschicht (103, 113, 123), die auf einer Seite der Platte ausgebildet ist, und einer Ablöseschicht (104, 114, 124), die die Klebstoffschicht abdeckt, dadurch gekennzeichnet, daß die Platte aus Kunststoffschaum ist und daß an ausgewählten Stellen an einer oder beiden Seiten der Platten Nuten (102, 112, 122) ausgebildet sind.

2. Maske nach Anspruch 1, dadurch gekennzeichnet, daß der Kunststoffschaum ein Polystyrolschaum ist.

3. Maske nach Anspruch 1 oder 2, dadurch gekennzeichnet, daß die Ablöseschicht (104, 114, 124) ein Ablöspapier ist.

4. Maske nach Anspruch 1, 2 oder 3, dadurch gekennzeichnet, daß die Platte (102, 112, 122) hergestellt ist durch Ausdehnungsformen.

5. Maske nach Anspruch 1, 2 oder 3, dadurch gekennzeichnet, daß die Platte (102, 112, 122) hergestellt ist durch Ausschneiden aus Kunststoffschaum-Blöcken.

6. Maske nach einem der vorstehenden Ansprüche, gekennzeichnet durch eine Grundierschicht (115), die zwischen der Platte (111) und der Klebstoffschicht (113) angeordnet ist.

7. Maske nach Anspruch 6, dadurch gekennzeichnet, daß die Grundierschicht (115) die beim Ausdehnungsformen der Platte ausgebildete Oberfläche ist.

8. Maske nach einem der vorstehenden Ansprüche, dadurch gekennzeichnet, daß die Ablöseschicht (124), die die Klebstoffschicht (123) abdeckt, Schnittlinien (124A, B, C) entlang der Nuten der Platte aufweist.

9. Maske nach Anspruch 8, dadurch gekennzeichnet, daß die Schnittlinien (124A, 124C) durchgehende oder unterbrochene Linien sind.

10. Maske nach Anspruch 8, dadurch gekennzeichnet, daß die Schnittlinien (124B) punktierte Linien sind.

**Revendications**

1. Elément de masquage comprenant un panneau (101, 111, 121) de matière plastique, une couche adhésive (103, 113, 123) formée sur une face dudit panneau, et une feuille de protection décollable (104, 114, 124) qui recouvre ladite couche adhésive, caractérisé en ce que la panneau est en une mousse de matière plastique et en ce que des rainures (102, 112, 122) sont formées à des endroits choisis sur une face ou sur les deux faces du panneau.

2. Elément de masquage selon la revendication 1, caractérisé en ce que la mousse de matière plastique est une mousse de polystyrène.

3. Elément de masquage selon la revendication 1 ou 2, caractérisé en ce que ladite feuille de protection décollable (104, 114, 124) est une feuille de papier décollable.

4. Elément de masquage selon la revendication 1, 2 ou 3, caractérisé en ce que ledit panneau (102, 112, 122) est produit par moulage avec expansion.

5. Elément de masquage selon la revendication 1, 2 ou 3, caractérisé en ce que ledit panneau (102, 112, 122) est produit par découpage dans des blocs de mousse de matière plastique.

6. Elément de masquage selon l'une quelconque des revendications précédentes, caractérisé par le fait qu'une couche d'apprêt (115) se trouve entre le panneau (111) et la couche adhésive (113).

7. Elément de masquage selon la revendication 6, caractérisé en ce que la couche d'apprêt (115) est la peau du panneau formé par moulage avec expansion.

8. Elément de masquage selon l'une quelconque des revendications précédentes, caractérisé en ce que la feuille de protection décollable (124) qui recouvre la couche adhésive (123) comporte des lignes de découpage (124A, B, C) le long des rainures du panneau.

9. Elément de masquage selon la revendication 8, caractérisé en ce que les lignes de découpage (124A, 124C) sont des lignes continues ou discontinues.

10. Elément de masquage selon la revendication 8, caractérisé en ce que les lignes de découpage (124B) sont des lignes perforées.

FIG.1

FIG.2

FIG. 3

FIG. 4

## FIG.5

## FIG.6

FIG. 7

FIG. 8

## FIG.9

## FIG.10

FIG.11

124C

124